# EUROPEAN PATENT APPLICATION

(11) **EP 0 933 287 A2**
(43) Date of publication of application: **04.08.1999**
(21) Application number: 99660018.5
(22) Date of filing: 01.02.1999
(51) Int. Cl.: B62D 47/00

(54) **Arrangement in vehicle**

(30) Priority: 02.02.1998 FI 980230
(71) Applicant: Karhumäki, Jorma, 33950 Pirkkala (FI)
(72) Inventor: Karhumäki, Jorma, 33950 Pirkkala (FI)
(74) Representative: Dahlström, Karl Krister

(57) **Abstract**

The invention relates to an arrangement in a vehicle intended and equipped for various display purposes.

The arrangement comprises means for tilting the vehicle floor in at least part of the vehicle. This way the vehicle can be rapidly and flexibly formed into an auditorium and a conference or show room with an even floor.

## Description

The invention relates to an arrangement in a vehicle, the arrangement being intended for use in a vehicle adapted to and equipped for various display and entertainment purposes, the vehicle comprising a showroom provided with seats in at least two successive rows.

Previously are known various wheeled exhibition equipments, vehicle-mounted showrooms, entertainment and conference rooms and other what are known as road show equipments, which can be conveyed or transported on their own platform to the customer. Such showrooms are usually built on a bus chassis, but constructions built on trailers are also in use. The purpose of such equipped showrooms is to transport a company or an equipment to be displayed to a customer, providing better service to the customers. When the premises are transported to the customer's yard, the customer does not have to spend time and money on travelling. The solution is also advantageous from the point of view of the product demonstrator since it allows efficient display tour planning involving visits to a plurality of destinations, thus saving time and money. The scope of mobile premises is naturally broader than that of corresponding fixed premises. Furthermore, vehicles of the type described can be used e.g. as efficient training premises, which can be transported to the company or the desired surroundings. This also allows training and conferencing during travelling.

The problem in current vehicles intended for display purposes is that it is difficult to arrange reasonable visibility and audibility for all participants in small premises. A presentation taking place at the front of the showroom is difficult to follow from the rear parts of the vehicle, in particular. Attempts have been made to solve the problem by building on a bus chassis a showroom with an inclined floor at the rear end, and providing the showroom with tiered seats. The problem of this solution is, however, that the vehicle is restricted to be used solely as a transferable auditorium. It is not suitable e.g. for conferences, buffet meetings or other occasions where people need to move around the premises. On the whole, walking on an inclined floor is inconvenient. Further, it is difficult to display products or the like in premises having an inclined floor. Consequently, such a solution is structurally very inflexible and suitable for one purpose only. In this case the vehicle, often very expensive, is inefficiently utilized since it cannot be used in a variety of ways.

It is the object of the present invention to provide a more versatile use of a vehicle than previously and improve the preparedness of the vehicle for various display uses.

The arrangement of the invention is characterized in that at least part of the showroom floor is connected pivotally and that the arrangement comprises means for tilting the pivoted floor in regard to the pivoting in the desired angle in respect to the fixed floor, and for moving said floor in substantially the same direction with the fixed showroom floor.

It is an essential idea of the invention that at least part of the floor surface of the vehicle can be tilted in the desired angle in respect to the pivoting by transfer means and moved to the same level or at least in the same direction as the fixed floor surface of the vehicle. This way the showroom can be turned into an auditorium with seats tiered at different heights. Furthermore, the same premises can be converted into a space with a substantially even floor, whereby it can be used e.g. in conferences or when people need to move around in the showroom or if products are to be displayed.

It is an advantage of the invention that the vehicle can be applied in more versatile ways than previously to various display, entertainment and training sessions and conferences. The inclination of the floor rapidly and flexibly ensures a good auditory and visual communication, resembling that of an auditorium. Furthermore, with the floor only slightly inclined or substantially horizontal, the vehicle can be used in a variety of ways in situations when creating auditory and visual communication to the front of the showroom is not decisive. The invention also allows the floor to be tilted as required by the display, making the display more effective. A further advantage is that the floor can be tilted, if required, after the spectators have been seated. This facilitates the movement of handicapped people in particular in the vehicle. A still further advantage of the invention compared with a fixedly tilted vehicle is that during transport the showroom can be kept in a horizontal position, which is more convenient from the point of view of the passengers. In this case the seat is more pleasant to travel in, and offers a place to rest with the front seats providing visual and auditory protection. Furthermore, travelling is safer with the floor in the basic position, since in a collision the front seat prevents the person from being thrown forward, simultaneously giving protection against objects flying from the front. A still further advantage is that various maintenance and repair operations are easier to carry out with the floor moved to the horizontal plane.

The invention will be described in greater detail in the attached drawings, in which
Figure 1a is a schematic side view of a vehicle provided with the arrangement of the invention and opened,
Figure 1b is a top view of the vehicle of the previous figure,
Figure 2a schematically shows the vehicle of Figure 1, provided with the arrangement of the invention, with its tilting floor in the lower position, and
Figure 2b is a schematic side view of the vehicle of the previous figures with the seats grouped for a conference.

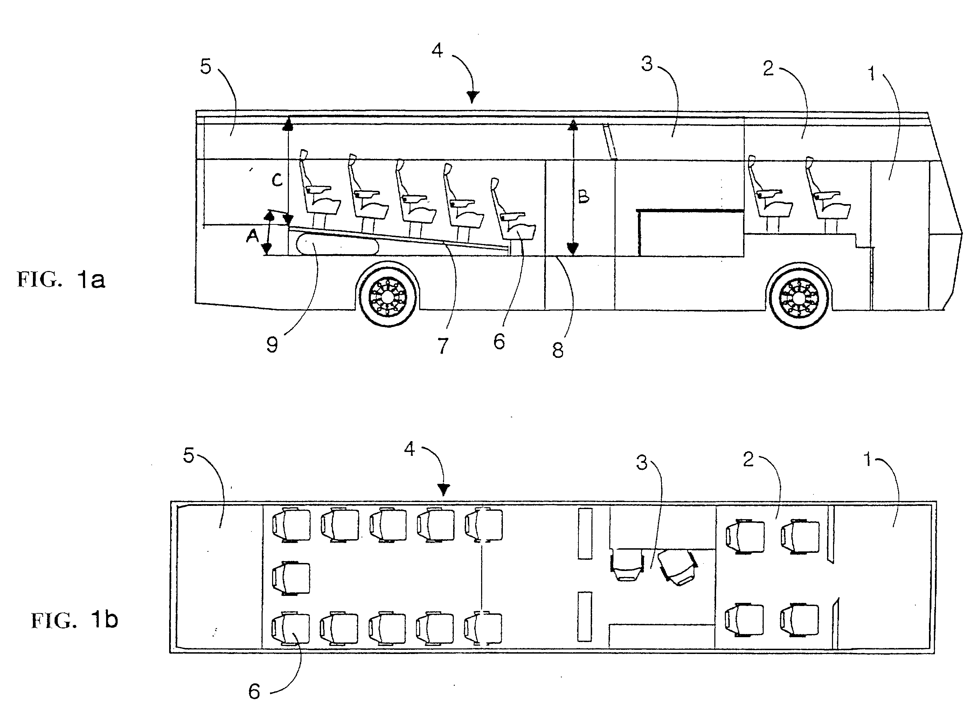

Figure 1a schematically shows a multi-use display vehicle, constructed in the frame of a bus. A bus is a natural chassis to be used in the arrangement of the invention, but the invention can be applied to other ground equipment, such as trailers, trucks and vans. The vehicle shown in the figure comprises, starting from its front end, a cab 1, a cabinet 2, a kitchen 3, an actual showroom 4, and service spaces 5 at the rear of the vehicle, including e.g. a toilet and a trunk. The cab 1 is preferably isolated from the rest of the space allowing the driver to concentrate on his tasks. The cabinet 2 is similarly separable by curtains, movable partitions or the like from the rest of the space, allowing it to be used as a separate private passenger cabin or e.g. the conference room of a small group. The vehicle of the figure further comprises a kitchen, enabling catering during exhibitions. If required, the kitchen 3 can also be used as a product display and showroom. As is evident, the showroom 4 operates both as the premises for various displays and as a normal passenger cabin. A required number of seats 6 are arranged in the showroom, the number naturally being dependent on the available space. In the solution of the example, the number is 11, arranged in five rows transversely to the vehicle, as is seen in Figure 1b. In versions built on bus chassis or other relatively narrow frames, a passage has to be arranged between the parallel seats. On the other hand, the passage can be utilized when the seats are turned to a conference position in the manner shown in Figure 2b.

The vehicle is further provided with an arrangement comprising means for tilting and locking at least part of the showroom floor in the desired angle. In this case the part 7 of the floor that can be tilted is pivotally connected in respect to the fixed floor 8 of the showroom. Tilting is achieved by using at least one transfer means 9, which can be e.g. a pneumatic bellows, disposed in the space between the floor 7 to be tilted and the frame of the vehicle, at the free end of the part of the floor to be tilted. In this case the angle of tilt A depends on the amount of air in the bellows. It is natural to use pressurized air with heavy equipment, since pressurized air is produced in a heavy equipment for other purposes, too, e.g. for brakes and door actuators. The tilting may naturally also be achieved by means of a pressure medium driven cylinder, e.g. a hydraulic cylinder, or alternatively by arranging e.g. an electric motor to use a screw/nut combination or a corresponding mechanical solution providing the transfer movement. The angle of tilt A is preferably between 0 and 30° and is steplessly adjustable. The arrangement may alternatively comprise limits that can be defined and enable tilting of the floor to preset angular positions. In a lower position the floor 7 to be tilted can settle either at the same level as the adjacent fixed floor 8, or there may be a slight difference in height therebetween. The height B of the interior of the vehicle is, in turn, preferably arranged such that even in a tilted position it is possible to move around in the showroom 4 without any danger of hitting one's head in the ceiling. Setting the height B of the interior at e.g. 2,400 mm allows a sufficient angle of tilt A from the point of view of visibility, and a sufficient interior height even at the highest point C of the tilted part. Furthermore, the seats 6 can be tilted so that the position of the seat can be maintained substantially unchanged irrespective of the tilting of the floor. This may also be arranged to take place automatically according to the angle of tilt of the floor.

Figure 1b shows the layout of the vehicle of Figure 1a. The figure shows the seats 6 in a normal position, i.e. facing straight ahead in the direction of travel of the vehicle. The seats are preferably in this position during travel and when a display is taking place in the showroom.

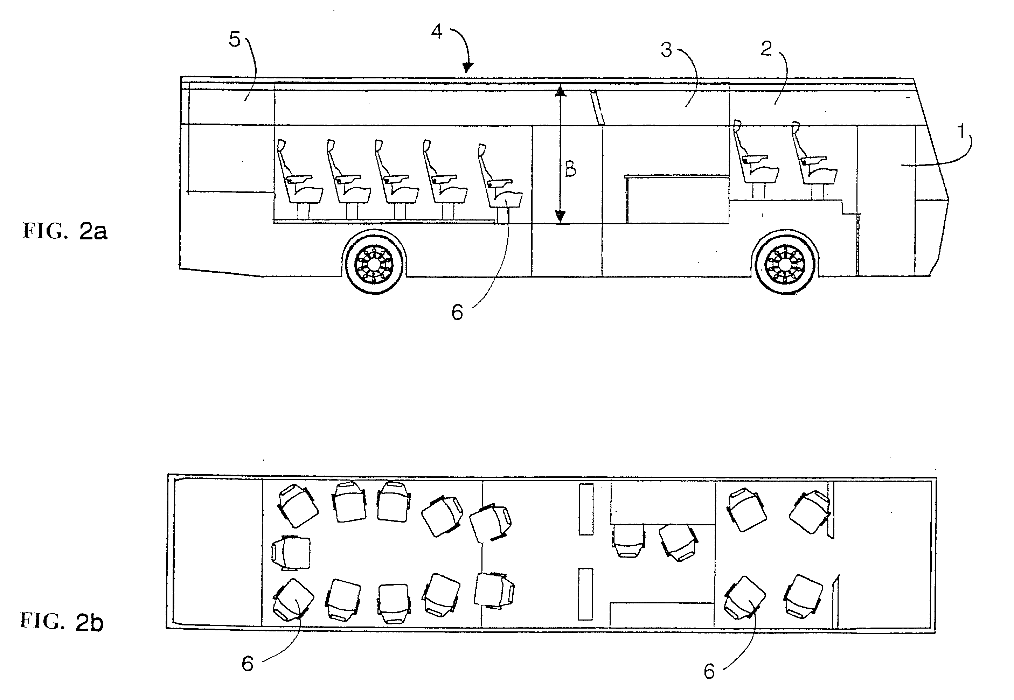

Figure 2a shows the vehicle of Figure 1a with the movable floor 7 in a lowered position. For the sake of clarity the floor transfer means are not presented. The seats 6 are preferably arranged by means of suitable quick-disconnect fittings, and can be disconnected when needed to form different arrangements. This also allows one larger area to be formed for e.g. exhibitions.

Figure 2b further shows an alternative layout solution for the vehicle according to the previous figures. In this case the seats 6 have been moved to a conference position both in the actual showroom 4 and in the cabinet 2. For this purpose the seats 6 are preferably arranged to be guided by rails or the like, allowing them to be moved and turned along these control elements and locked in the desired position.

The drawings and the related specification are only intended to illustrate the inventive idea. The details of the invention may vary within the scope of the claims. In other words, it is not at all necessary to divide the vehicle into different compartments in the manner presented in the figures, but the vehicle can be composed of a completely undivided space, providing in principle one continuous showroom, or it can be composed of compartments divided by customers in a manner different from that presented in the figures. Furthermore, the tilting floor can be arranged in some other location than at the rear of the showroom, as shown in the figures. Accordingly, the entire showroom floor can be tilted, providing a spacious auditorium. The tilting can be carried out either in the longitudinal or in the lateral direction of the vehicle. To tilt the vehicle floor in the longitudinal direction is a particularly successful solution in e.g. a display bus comprising a separate projection which can be moved in the cross direction of the bus. In this case the display space can be arranged in the projection and the rest of the bus floor can be tilted to constitute the auditorium. This also avoids unnecessary passages. The rear and front of the showroom can also be separately tilted so that a horizontal space for the display is left therebetween. Another alternative is to tilt the movable part of the floor, not only upwards, but even below the fixed floor, making it easier to follow e.g. video or slide shows from the lower level, since usually the display devices are installed close to the ceiling of the vehicle. Furthermore, the floor to be tilted does not have to be pivoted at one edge, but the pivoting can be arranged at a distance from the edge, and when the floor is tilted, the portion of the floor on the first side of the pivoting moves up and, correspondingly, the portion on the other side moves down as a seesaw. The entire floor to be tilted can also be arranged movable in the vertical direction. In designing the structures of the vehicle, one must make sure that no risk of squeezing is created at any point between the floor to be tilted and the other structures of the vehicle. Although the figures and the related specification deal with a solution constructed on a bus chassis by way of example, the arrangement of the invention can very well be applied to rail equipment. It is also well suitable for boats, ships, the like and for aircrafts.

## Claims

1. An arrangement in a vehicle, the arrangement being intended for use in a vehicle adapted to and equipped for various display and entertainment purposes, the vehicle comprising a showroom (4) provided with seats (6) in at least two successive rows, **characterized** in that at least part of the showroom (4) floor is connected pivotally and that the arrangement comprises means for tilting the pivoted floor (7) in regard to the pivoting in the desired angle in respect to the fixed floor (8), and for pivoting said floor so that is disposed substantially in the same direction as the fixed showroom (4) floor (8).

2. An arrangement as claimed in claim 1, **characterized** in that the floor (7) to be tilted is movable substantially to the same plane with the adjacent fixed floor (8).

3. An arrangement as claimed in claim 1 or 2, **characterized** in that the angle of tilt (A) of the showroom (4) floor (7) to be tilted is between 0 and 30° in respect to the horizontal plane of the vehicle.

4. An arrangement as claimed in any one of the preceding claims, **characterized** in that the entire floor (7) to be tilted is arranged movable in the vertical direction.

5. An arrangement as claimed in any one of the preceding claims, **characterized** in that tilting of the floor is arranged to be achieved by means of a pneumatic bellows.

6. An arrangement as claimed in any one of claims 1 to 4, **characterized** in that tilting of the floor is arranged to be achieved by means of a pressure medium driven cylinder.

7. An arrangement as claimed in any one of claims 1 to 4, **characterized** in that tilting of the floor is arranged to be achieved by means of a motor and a screw mechanism coupled thereto.
